# EUROPEAN PATENT SPECIFICATION

(11) **EP 3 748 492 B1**
(45) Date of publication and mention of the grant of the patent: **20.04.2022**
(21) Application number: 20184977.5
(22) Date of filing: 08.01.2014
(51) Int. Cl.: G06F 8/61, G06F 9/445

(54) **DOWNLOADING AND LAUNCHING AN APP ON A SECOND DEVICE FROM A FIRST DEVICE**
HERUNTERLADEN UND STARTEN EINER APP AUF EINER ZWEITEN VORRICHTUNG DURCH EINE ERSTE VORRICHTUNG
TÉLÉCHARGEMENT ET LANCEMENT D'UNE APPLICATION SUR UN SECOND DISPOSITIF À PARTIR D'UN PREMIER DISPOSITIF

(30) Priority: 28.01.2013 US 201313751821; 31.12.2013 KR 20130168267
(43) Date of publication of application: 09.12.2020
(62) Divisional of application: 14150416.7
(73) Proprietor: Samsung Electronics Co., Ltd., Gyeonggi-do 16677 (KR)
(72) Inventor: GAVA, Fabio, Ladera Ranch, CA 92694 (US); SHELANSKY, Andrew, Irvine, CA 92614 (US); XIE, Fei, Irvine, CA 92601 (US); VISWANTHAN, Murugan, Irvington, TX 75038 (US); LEE, Shiangfeng, Irvine, CA 92603 (US); YANG, Nan, Newport Beach, CA 9266 (US)
(74) Representative: Appleyard Lees IP LLP

(56) References cited:
- US-A1- 2012 054 735
- Netflix: "DIAL DIscovery And Launch protocol specification Version 1.6.4", , 19 December 2012 (2012-12-19), pages 1-580, XP055372033, Retrieved from the Internet: URL:http://web.archive.org/web/20131019041 119/http://www.dial-multiscreen.org/dial-p rotocol-specification [retrieved on 2017-05-11]

## Description

### TECHNICAL FIELD

An embodiment of the present invention relates generally to software for computing devices and convergence networking of such devices. More specifically, it relates to enabling downloading and executing of software applications on various user devices in the same network.

### BACKGROUND

Applications that run on non-traditional computing devices, commonly referred to as "apps," are now quite widespread and known to many users mostly due to their increasingly prevalent use of smartphones, tablets, and other mobile devices. Apps are presently available on a wide range of platforms, including TVs and PCs. Smartphone users frequently download, install and use apps onto their devices. This practice is becoming increasingly popular as well with tablets. Apps are one of the drivers making these mobile devices more and more popular. Finding an app in an app marketplace or app store and then downloading it onto a mobile device is a straightforward procedure and has now become second-hand nature for a lot of users, particularly younger ones.

However, downloading an app onto a TV has not yet caught on among the general public. People do not generally think of executing an app on their TV, even if they have an app on their smartphone and a companion or compatible app is available. Users simply are not aware that there is a similar app available for download on their TV. Or, the user has already downloaded a similar or companion app on their TV but is unaware that the two apps (e.g., on the phone and TV) executing together can provide an enhanced user experience. In instances where a user thinks about executing an app on a TV, she does it by using a remote control and downloads and executes it directly on the TV.

Convergence among various devices is becoming more popular, especially among devices on a home network that has a TV. Convergence features provide the capability of devices to communicate and, consequently, new mechanisms for deploying apps on other devices within a convergence network would be desirable. There is an increasing desire to have devices on a local network communicate with each other and share information. For example, with apps, there is often a companion app that executes on a compatible device having an entirely different platform. To illustrate, there may be a Hulu app for the TV and for a smartphone, but the user only has the one on her smartphone. However, her experience with Hulu would be better if she could execute the Hulu app for the TV as well. As such, it would be desirable to have two or more companion apps work together with minimal user input to deliver an enhanced user experience for the apps.

US patent application publication 2012/0054735 discloses an electronic mobile communication device configured to install a computer program onto a computing device that is different than the mobile communication device. The installation process includes the electronic mobile computing device communicating with the computing device to obtain information for use in installing the computer program, and the electronic mobile computing device executing an installer for the computer program. The installer uses the information to install the computer program on the computing device.

The Netflix DIAL discovery and launch protocol specification v. 1.6.4 published 19 December 2012 (XP055372033) discloses a a protocol for discovery and launch that enables applications on a smartphone, tablet or similar to discover and launch applications on a TV, Blu-ray player, set-top box or the like.

### SUMMARY

According to the present invention there is provided a computer readable medium, a display device which is a TV and a terminal device as set forth in the appended claims. Other features of the invention will be apparent from the dependent claims, and the description which follows.

The two devices will typically be in two different classes, that is, have different operating systems, platforms, and the like, but this is not required (e.g., the terminal device can be a smartphone or tablet; the display device is a TV).

The second device is queried by the first device to determine whether there is a compatible or companion app already installed on the second device. If there is, it is then determined whether the companion app is presently running on the second device. If it is not, then a message is displayed on the first device asking whether the user of the first device wants to execute the companion app on the second device. If the user of the first device consents, the companion app is executed on the second device. In one embodiment, there may be a message displayed on the second device stating that another user is causing the execution of an app on the second device. For example, a person watching TV will see a message that another user, via her smartphone, is causing the execution of a companion app on the TV. The program or show that the person is watching on TV will not be interrupted.

Another aspect of the invention is a method of using a first device to execute an app on a second device. The first device queries the second device for a compatible app to see if it is already installed. The user of the first device is prompted as to whether to install the compatible app on the second device. It is then determined whether to install the compatible app on the second device. A request is transmitted to the second device to install the compatible app. The compatible app is then downloaded onto the second device. The fist app and the second app execute together to produce a convergent multiscreen user experience with the apps.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is an illustration of a series of displays on two devices connected in a local/home network in accordance with one embodiment;
FIGS. 2A and 2B are flow diagrams of processes for discovering, executing, and downloading a companion app on a second device in accordance with one embodiment of the present invention;
FIG. 3 is a block diagram showing relevant components and modules in a first device in accordance with one embodiment of the present invention; and
FIGS. 4A and 4B are diagrams of a computing device suitable for implementing one or more embodiments of the present invention.

In the drawings, like reference numerals are sometimes used to designate like structural elements. It should also be appreciated that the depictions in the figures are diagrammatic and not to scale.

### DETAILED DESCRIPTION

Applications are currently available on a wide range of platforms and devices, including smartphones, tablet devices, mobile gaming devices, computing devices in cars, PCs, and TVs. Users are accustomed to the app download, installation, and usage experience on their handheld and mobile devices, the vast majority of which are smartphones and tablets. Now that convergence features enable communication between all these devices and platforms on a local/home network, new mechanisms described in the various embodiments of the present invention deploy apps among various devices in the convergence network. One example of convergence is allowing the user to launch an app on a TV using a smartphone. The overall goal is that when devices are on the same network, it would be desirable to have synergy among the devices.

Methods and systems for enhancing the user experience of application downloading and usage between multiple devices in a network are described in the various figures. One or more embodiments describe the ability of one instance of an app on a first device to identify and verify installation and/or execution of a companion app on a second compatible device where the two devices may have entirely different platforms (e.g., smartphone operating system and TV platform). The term platform may refer to the application runtime environment provided by the TV. It may be described as a layer above the TV operating system that provides both a runtime environment for generic programming instructions as well as the APIs to interface with specific TV functions, services or devices. In the TV application platform, programmers have a choice of programming, for example, in JavaScript or Flash. There are also APIs to interface with the TV tuner, infra-red remote, WiFi/Ethernet/Bluetooth adapters, cameras, and the like.

The present invention delivers more than a mere "split screen" user experience or simple sharing of an app on the devices where one app is executing on a smartphone and another related app is executing on a TV. The invention describes ways in which the experience for users having their devices on the same network converge in order to improve the user experience with respect to a particular app. In this manner, it delivers an enhanced and efficient means of providing an n-screen experience with the app; ways that provide synergy between devices on the same network.

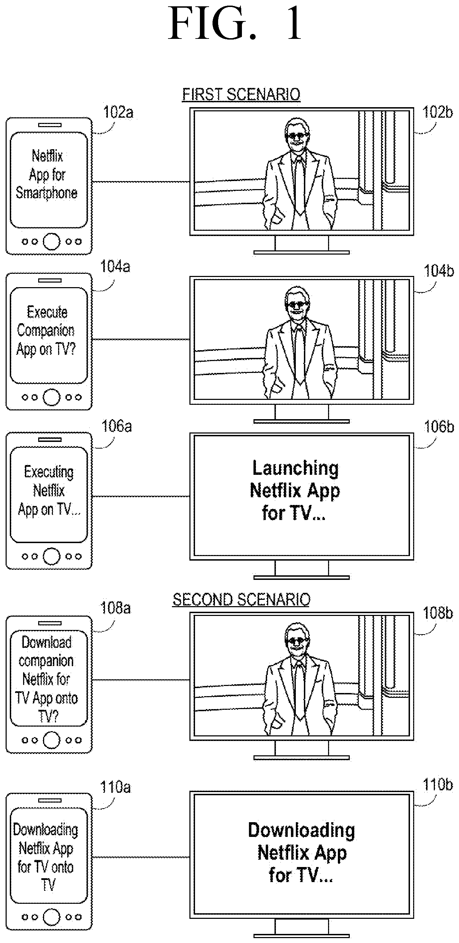

FIG. 1 is an illustration of a series of displays on two devices connected in a local/home network in accordance with one embodiment. For illustrative purposes, the two devices are a smartphone and a TV. In a first scenario, a smartphone display 102a shows a Netflix app which the user is browsing. The device is connected to a home network and is in communication with a TV displaying a TV show 102b. The smartphone discovers that the TV has a companion Netflix app and asks the user if he wants to execute the Netflix companion app on the TV in display 104a. During this time the TV still displays the TV show 104b. If the smartphone user gives permission to execute the companion Netflix TV app on the TV, in one embodiment a message as shown in 106b is displayed on the TV ("Launching Netflix App for TV..." or something similar). Additional information such as the name of the user who gave permission to launch the app may be displayed or the message may be displayed in a side bar or smaller display area while the TV show continues to be displayed.

In a second scenario, the companion app may not be on the second device but one is available from an app download server or other source on the network. In this case, a display such as one shown in 108a where the user is asked whether he wants to initiate a download of a companion "Netflix for TV" app onto the TV. During this time, the TV continues to display a TV show or other image as shown in 108b. If the user gives permission to download the companion app, a display such as 110a on the smartphone indicating that the Netflix for TV app is being downloaded is shown. The TV may display a message such as shown in 110b ("Downloading Netflix App for TV...") or a similar message. At download completion the companion app will execute automatically. In an alternative embodiment the TV could prompt the user again for confirmation. As these display images show, most of the processes take place in the background, beginning with discovery of the second device to the launching or downloading of the companion app. The only interaction with the user is seeking permission to perform the launching or downloading activity. In another embodiment, these activities may be done automatically without confirmation from the user. This may be preferable for users who always want to have companion apps downloaded or executed on one or more additional devices on the network. In this scenario, the user will automatically have a convergence experience (multi-screen experience) with the app on his devices.

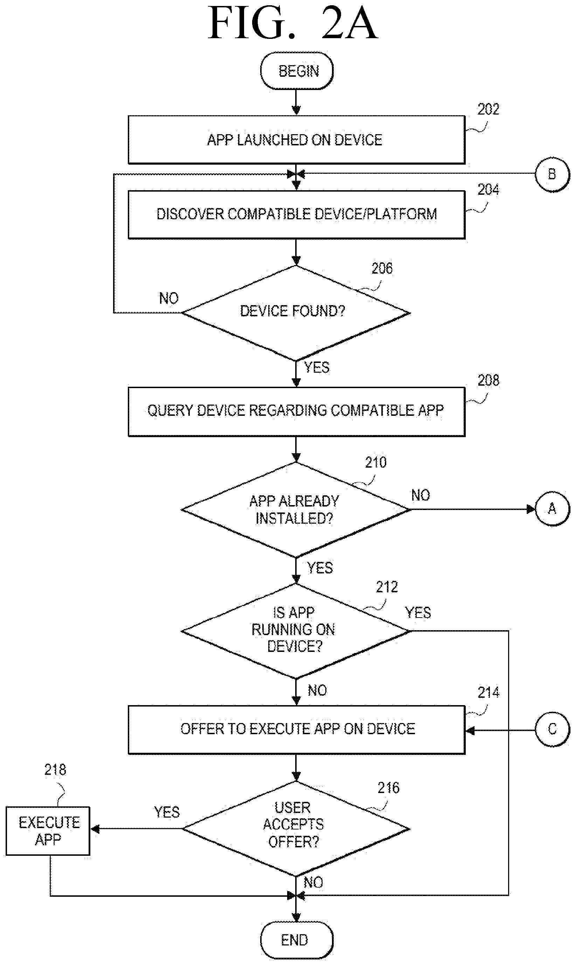

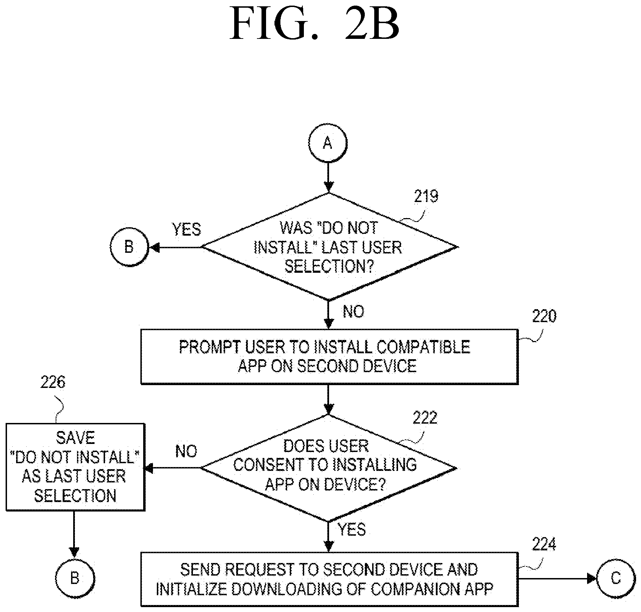

FIGS. 2A and 2B are flow diagrams of processes for discovering, executing, and downloading a companion app on a second device in accordance with one embodiment of the present invention. At block 202, a user launches an app on a device which has a particular platform and is using the app when the process starts. For ease of explanation, this app is sometimes referred to as the "primary app" (and sometimes referred to as the "first instance" of the app) and the device is referred to as the "first device." The device, which may be any device capable of executing an application, is connected to a home/local network.

At block 204, the first device discovers a compatible device/platform on the network. This discovery may be done using conventional and suitable protocols such as UPnP, Bon Jour, and the like. A device or platform is compatible if it can execute a companion app to the primary app. At block 206, it is determined whether such a device has been discovered on the network.

If such a device (the "second device"), such as a TV or tablet, is found on the network, control goes to block 208 where the first device queries the second device whether the second device presently has a companion or compatible app (with respect to the primary app on the first device). The second device has a software stack that can handle this type of query or request. The query is sent using a communication protocol as defined or chosen by the developer. It may be a proprietary communication protocol. If no compatible device is found on the network, the discovery process continues in the background and control goes back to block 204.

At block 210, the first device is informed of whether a companion app is already installed on the second device. If a companion app is already on the second device, control goes to block 212. If the companion app is not installed, control goes to block 220 of FIG. 2B. If the app is installed, at block 212 it is determined whether the companion app is presently running on the second device. If it is, the user is already having an enhanced 2-screen, convergence experience with the app and the process ends. If it is not, at block 214, the primary app displays a message on the first device asking the user if he wants to execute the companion app on the second device, such a display is shown in display 104a of FIG. 1. The code or logic to display this message may be embedded in the primary app presently executing on the first device.

At block 216, the first device determines whether the user accepts the offer (i.e., gives permission to execute the companion app on the second device). If the user does not, the process ends. If the user accepts the offer, a message is sent to the second device and the companion app executes at which stage the process ends. Returning to the path where the companion app is already installed on the second device, the user can begin experiencing app and device convergence on two devices.

Going back to block 210, if the companion app is not installed on the second device, control goes to block 220 in FIG. 2B. At this step the user is prompted as to whether he wants to install a compatible or companion app on the second device, as shown in screen display 108a of FIG. 1. Part of the process here may also involve checking whether the companion app is available for downloading from a server on the network or from an online source for apps, commonly known as an application store. At block 219, the device checks whether the last user selection for the app was to not install (e.g., "Do Not Install"). If so, control goes back to discovery at block 204. If it was not the last selection by the user, control goes to block 220. Here, assuming the app is available, the user of the first device is prompted about installing it as shown in block 220. At block 222, it is determined whether the user consents to installing the companion app on the second device. If the user does consent or give permission to have the companion app downloaded onto the second device, control goes to block 224 where a request is created and transmitted to the second device using the communication means described above. The request instructs the second device to initialize downloading of the companion app. At this stage the companion app is downloaded onto the second device as shown in displays 110a and 110b. In this manner, a device in the local network, such as a TV, downloads a specific app according to instructions sent from another device in the network. In one embodiment, control then goes to block 214 of FIG. 2A. Here the user is asked whether to execute the downloaded app.

At block 222, if the user does not consent to downloading the app, control goes to block 226 where a "do not install" setting is saved as the last user selection. This setting may be checked prior to block 220 where the user is prompted to install the companion app. If this setting indicates that the user previously selected the "do not install" option, he is not prompted again on the same question. The process then loops back to block 204 where the discovery process continues. For example, although the user may not want to install the app on the TV, a tablet may now be discoverable on the network and the same process executing in the background on the primary device will occur for this or any new devices. In this case, the user may want to install the companion app on the tablet.

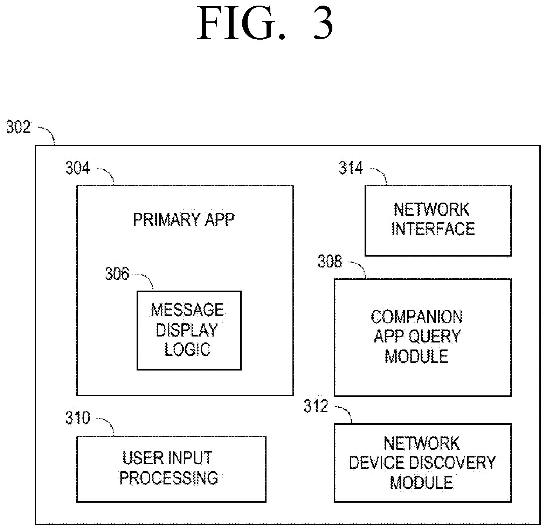

FIG. 3 is a block diagram showing relevant components and modules in a first device, such as a smartphone, in accordance with one embodiment of the present invention. A first device 302 has a primary app 304 as described above. In one or more embodiments, primary app 304 may contain logic for displaying messages on the first device, such as "Execute Companion App on TV?" or "Executing Netflix App on TV..." and the like. The user may provide input to queries by primary app 304 or other modules in device 302. These inputs may be processed by user input processing module 310. As described above, queries are also made of the second device, such as a TV, for example, to determine whether a companion app exists on the second device, if it does, whether it is executing, and so on. This may be done by logic in a companion app query module 308. First device 302 starts the process of finding a second device and companion app by initiating a discovery process on a local network using a suitable protocol such as UPnP or Bon Jour. This may be performed by network device discovery module 312 or other conventional modules for implementing such protocols. There may also be a network interface component 314 for communicating on the local network.

Through the processes described above, an application running on one class of devices (e.g., smartphone, tablet, or devices having the same operating system or platform) has awareness of a companion application for a second class of devices (e.g., a TV). A device from the first class realizes or becomes aware of the presence of a device from the second class on the same local network and the first device coordinates the download and installation of the companion app enabling communication of the two apps and providing a convergence experience for the user. Described below are variations of the above embodiments and alternative embodiments. Some of the description may repeat certain aspects of the content in FIGS. 1, 2A, and 2B but is provided to support the various illustrations.

In one embodiment, the ability of one instance of an application on a first device to verify an installation of a companion or second instance of the application on a second device is described. Also described is the ability of the first instance on the first device to initiate a download of the companion application on a second device. The first and second devices may be any suitable computing device such as smartphones, tablets, TVs, mobile or stationary gaming devices, and PCs. For example, in one example the process may begin with a first device, such as a tablet, running a first instance of an app. The first device is connected to a local/home network and, in the background, discovers that there is a compatible or suitable second device on the network, such as a TV or PC, and communicates with the second device to exchange data or commands, such as commands relating to a discovery protocol (e.g., UPnP) which allows the first device to discover the second device and find its capabilities, including what apps are installed. The first device then sends a request to the second device to determine whether the second device has a companion or second instance of the (first instance) app running on the first device.

The second device sends a response to the request to the first device, i.e., whether the second device as the companion app installed or whether the server has it available for download. If the second device does not have the companion app and the server has it available for download, the first instance of the app on the first device displays a message or notification to the user. The notification indicates that a companion app is available for the second device and, in the same notification, asks whether the user wants to have the companion app downloaded to the second device from the server or other source.

If the user gives permission or approval to download the companion app, the first device issues a command to the second device to download the companion app from the server. The second device then initiates a download of the companion app after which the second device has the companion app. The first instance of the app initiates the download of a companion instance of the app onto a separate device where all the processes, except seeking permission from the user, execute in the background. The user does not need to explicitly connect to and browse an app store or app market. The mechanism for executing the processes described above can be embedded in any app in order to promote use of a companion app for a second device.

In this manner, app vendors encourage users to install companion apps onto more devices, for which consumers may not have been aware that apps were available. This is most often the case with apps for TVs. As a result of the embodiments described herein, the second device, such as the TV, is likely used more often as an app device. The user is more aware and is more inclined to use convergence apps and have a better user experience with the apps.

To illustrate an embodiment, one device is a smartphone and the other device is a TV. The smartphone is the device being used by a user and has a primary app (also referred to as a client app) that is executing on the smartphone and the TV, in this illustration, already has an app that is a companion app to the primary app on the smartphone. It should be noted that the same relationship can be seen in the other direction, that is, the user is watching TV or the user is using (running) an app on the TV and the TV has the primary app and the smartphone already has a companion app to the primary app on the TV.

Returning to the illustration, the smartphone is running the primary app, and is on the same network as the TV. It discovers that there is a compatible TV in the same network. Here compatible implies it is on the same network and is able to execute apps. The smartphone then "pairs" with the TV. If there are other compatible devices, such as other smartphones or PCs, the smartphone carries out the same process with the other devices. The smartphone then checks via the network whether the TV has a companion app to the app executing on the smartphone. If the TV has a companion app, this fact is transmitted to the smartphone, again via the local network. The primary app on the smartphone then displays a message to the user telling the user that there is a companion app on the TV and asks whether the user wants to launch the companion app. If the user gives approval, the smartphone issues a command to the TV via network protocol (which may be proprietary) to launch the companion app on the TV. The TV launches the companion app. The primary app on the smartphone then communicates with the companion app to provide an enhanced, multi-screen user experience with respect to the app.

As described above, an embodiment of the invention introduces a new mechanism for an app on a first device to discover and launch a companion app on a second device. This may be described as a peer-to-peer communication over a home/local network as described in FIGS. 2A and 2B. It is different from conventional home networking standards because an embodiment of the invention provides a mechanism for proprietary communication between the app on the first device and the companion app on the second device over standard HTTP/HTTPS, UPnP, or other conventional protocols. This mechanism, shown in blocks 204 to 224, is a direct communication mechanism between two devices over the home network, typically a wireless access point, router, or at least a network switch may be involved. Alternatively, the first and second devices could communicate over Bluetooth or Wi-Fi Direct standards which do not require any network infrastructure device. These standard technologies are used to discover and connect to other devices in the home/local network. As a result, embodiments of the present invention can support any device type and are not tied to a specific operating system, platform, or product. The developer can define their own proprietary communication protocol over this standard channel (e.g., using customized JSON, XML messages, and the like).

The invention introduces a way to identify a second device on the network and have a first device automatically ask the second device whether it has a companion app. The only interaction or communication with the user of the first device that may be needed is a message asking whether the user wants to download or execute a companion app on the second device in order to have a multi-screen app experience. In other embodiments, this is not needed.

The various embodiments enable a primary app on a first device to identify and discover a second device in the network and a compatible/companion app. This identifying and discovering is done in the background while the first device is on and connected to the network. The user of the first device is given the option of downloading and/or launching the companion app on the second device. In this manner, the user enjoys a rich, immersive app experience on multiple devices.

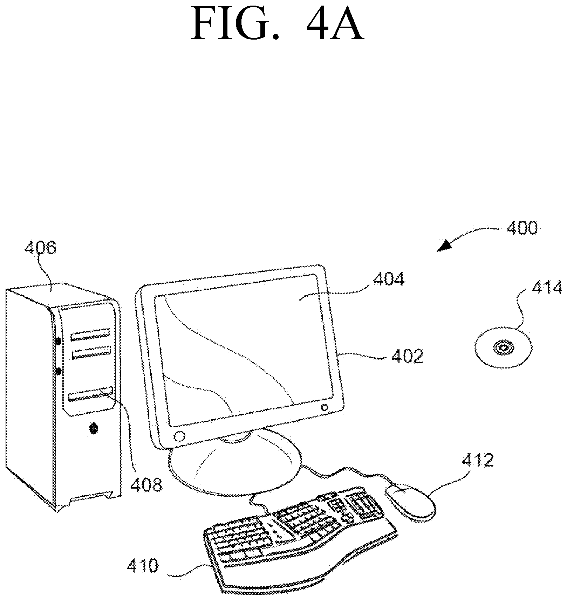

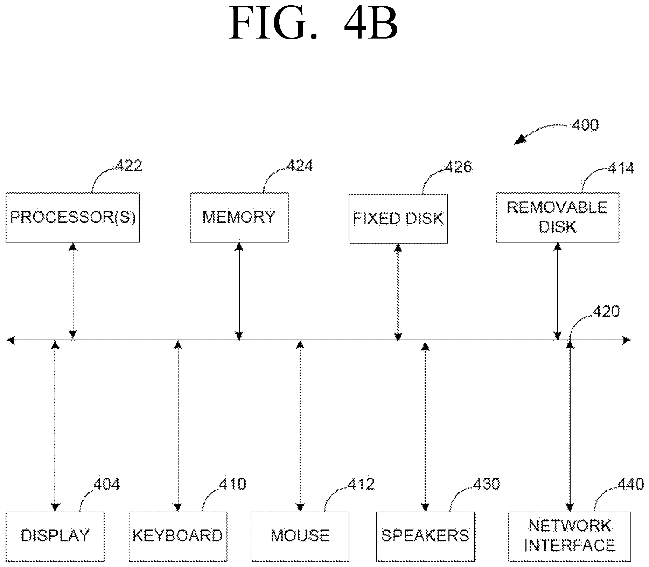

As noted above, the primary computing device in an embodiment of the invention is a TV, but it may be another computing device such as a smart phone, a tablet computer, a mobile device, a PC, and the like. FIGS. 4A and 4B illustrate a generic computing system 400, such as a TV, suitable for implementing embodiments of the present invention. Some of the devices that can be used in the present invention may have other features or components (such as an internal TV turner or an external STB) that are not shown in FIGS. 4A and 4B and not all the components shown in these figures (e.g., the keyboard) are needed for implementing the present invention. As such, FIG. 4A shows one possible physical implementation of a computing system as this term is broadly defined.

In one embodiment, system 400 includes a display or screen 404. This display may be in the same housing as system 400. It may also have a keyboard 410 that is shown on display 404 (i.e., a virtual keyboard) or may be a physical component that is part of the device housing. It may have various ports such as HDMI or USB ports (not shown). Computer-readable media that may be coupled to device 400 may include USB memory devices and various types of memory chips, sticks, and cards.

FIG. 4B is an example of a block diagram for computing system 400. Attached to system bus 420 is a variety of subsystems. Processor(s) 422 are coupled to storage devices including memory 424. Memory 424 may include random access memory (RAM) and read-only memory (ROM). As is well known in the art, ROM acts to transfer data and instructions uni-directionally to the CPU and RAM are used typically to transfer data and instructions in a bi-directional manner. Both of these types of memories may include any suitable of the computer-readable media described below. A fixed disk 426 is also coupled bi-directionally to processor 422; it provides additional data storage capacity and may also include any of the computer-readable media described below. Fixed disk 426 may be used to store programs, data and the like and is typically a secondary storage medium that is slower than primary storage. It will be appreciated that the information retained within fixed disk 426, may, in appropriate cases, be incorporated in standard fashion as virtual memory in memory 424.

Processor 422 is also coupled to a variety of input/output devices such as display 404 and network interface 440. In general, an input/output device may be any of: video displays, keyboards, microphones, touch-sensitive displays, tablets, styluses, voice or handwriting recognizers, biometrics readers, or other devices. Processor 422 optionally may be coupled to another computer or telecommunications network using network interface 440. With such a network interface, it is contemplated that the CPU might receive information from the network, or might output information to the network in the course of performing the above-described method steps. Furthermore, one or more method embodiments of the present invention may execute solely upon processor 422 or may execute over a network such as the Internet in conjunction with a remote processor that shares a portion of the processing.

In addition, one or more embodiments of the present invention further relate to computer storage products with a computer-readable medium that have computer code thereon for performing various computer-implemented operations. The media and computer code may be those specially designed and constructed for the purposes of one or more embodiments of the present invention, or they may be of the kind well known and available to those having skill in the computer software arts. Examples of computer-readable media include, but are not limited to: magnetic media such as hard disks, floppy disks, and magnetic tape; optical media such as CD-ROMs and holographic devices; magneto-optical media such as floptical disks; and hardware devices that are specially configured to store and execute program code, such as application-specific integrated circuits (ASICs), programmable logic devices (PLDs) and ROM and RAM devices. Examples of computer code include machine code, such as produced by a compiler, and files containing higher-level code that are executed by a computer using an interpreter.

Although a few preferred embodiments have been shown and described, it will be appreciated by those skilled in the art that various changes and modifications might be made without departing from the scope of the invention, as defined in the appended claims.

In summary, the user experience of application downloading and usage between multiple devices in a network is enhanced by the invention. One instance of an app on a first device is able to identify and verify installation and/or execution of a companion app on a second device where the two devices may have entirely different platforms (e.g., smartphone operating system and TV platform). The experience for users who have devices on the same network converge in order to improve the user experience with respect to a particular app. In this manner, an enhanced and efficient means of providing an n-screen experience with the app is enabled; ways that provide synergy between devices on the same network.

## Claims

1. A computer readable medium storing a computer instruction that allows a terminal device (102a, 104a, 106a, 108a, 110a, 302) to perform an operation when being executed by a processor of the terminal device, the operation comprising:
based on an application (304) being executed in the terminal device (202), receiving information regarding whether a first application is installed in a display device (102b, 104b, 106b, 108b, 110b) communicatively connected
to the terminal device (210) wherein the display device is a TV; and
providing a UI screen for at least one of executing the first application (214) or installing the first application in the display device (220) on an execution screen of the application (304)
based or the received information;
wherein the application Z (304) being executed in the terminal device is arranged to be in communication with the first application in the display device;
**characterized in that** the application (304) being executed in the terminal device and the first application in the display device execute together to produce a convergent multiscreen user experience with the applications.

2. The computer readable medium of claim 1, wherein the computer readable medium includes a memory for downloading the application.

3. The computer readable medium of claim 1, wherein the UI screen includes a menu for receiving a user command for executing the first application in the display device (104a).

4. The computer readable medium of claim 1, wherein the UI screen includes a menu for receiving a user command for installing the first application in the display device (108a).

5. The computer readable medium of claim 4, wherein the operation further comprises: based on a command for installing the first application being input through the menu, providing a UI indicating that the first application is being installed in the display device (110a).

6. The computer readable medium of claim 4, wherein the operation further comprises: based on a command for installing the first application being input through the menu, transmitting a control command for installing the first application (224).

7. The computer readable medium of claim 4, wherein the operation further comprises: based on a command for installing the first application being input through the menu, transmitting a control command for installing the first application (224) and a control command for executing the first application when installation of the first application is completed (218).

8. The computer readable medium of claim 1, wherein a platform of the terminal device is different from a platform of the display device.

9. The computer readable medium of claim 1, wherein the operation further comprises:
identifying whether the first application is being executed in the display device (212), and
based on identifying that the first application is not being executed, providing the UI screen for executing the first application (214).

10. A display device (102b, 104b, 106b, 108b, 110b) which is a TV, comprising:
a communication interface; and
a processor configured to transmit information for providing a UI screen on an execution screen of an application that is being executed in a terminal Z device (102a, 104a, 106a, 108a, 110a, 302) communicatively connected through the communication interface,
wherein the processor is configured to, based on whether a first application is installed in the display device, transmit information on whether the first application is installed through the communication interface so that a UI screen for at least one of executing the first application (214) or installing the first application (220) is provided on the execution screen of the application that is executed in the terminal device;
wherein the application being executed in the terminal device is arranged to be in communication with the first application in the display device;
**characterized in that** the application being executed in the terminal device and the first application in the display device are arranged to execute together to produce a convergent multiscreen user experience with the applications.

11. The display device of claim 10, wherein the processor is configured to, based on a signal for requesting the information being received, transmit the information in response to the signal.

12. The display device of claim 10, further comprising:
a display,
wherein the processor is configured to, based on a signal corresponding to a user command input through the UI screen being received, control the display to display a screen indicating at least one of an execution state of the first application or an installation state of the first application.

13. The display device of claim 10, wherein the UI screen includes a menu for receiving a user command for executing the first application in the display device.

14. A terminal Z device (102a, 104a, 106a, 108a, 110a, 302), comprising:
a display; and
a processor configured to:
based on an application being executed (202), receive information regarding whether a first application is installed in a display device (102b, 104b, 106b, 108b, 110b) which is a TV communicatively connected to the
terminal device 210); and
control the display to provide a UI screen for at least one of executing the first application (214) or installing the first application (220) in the display device on an execution screen of the application based on the received information;
wherein the application being executed in the terminal device is arranged to be in communication with the first application in the display device;
**characterized in that** the application being executed in the terminal device and the first application in the display device are arranged to execute together to produce a convergent multiscreen user experience with the applications.

## Patentansprüche

1. Computerlesbares Medium, das eine Computeranweisung speichert, die es einem Endgerät (102a, 104a, 106a, 108a, 110a, 302) ermöglicht, einen Vorgang durchzuführen, wenn es von einem Prozessor des Endgeräts ausgeführt wird, wobei der Vorgang Folgendes umfasst:
basierend auf einer Anwendung (304), die in dem Endgerät (202) ausgeführt wird, Empfangen von Informationen darüber, ob eine erste Anwendung in einem Anzeigegerät (102b, 104b, 106b, 108b, 110b) installiert ist, das kommunikativ mit dem Endgerät (210) verbunden ist, wobei das Anzeigegerät ein Fernsehgerät ist; und
Bereitstellen eines UI-Bildschirms für mindestens eines von Ausführen der ersten Anwendung (214) oder Installieren der ersten Anwendung auf dem Anzeigegerät (220) auf einem Ausführungsbildschirm der Anwendung (304) basierend auf den empfangenen Informationen; wobei die in dem Endgerät ausgeführte Anwendung (304) eingerichtet ist, mit der ersten Anwendung auf dem Anzeigegerät in Verbindung zu stehen;
**dadurch gekennzeichnet, dass** die im Endgerät ausgeführte Anwendung (304) und die erste Anwendung im Anzeigegerät gemeinsam ausgeführt werden, um mit den Anwendungen ein konvergentes Multiscreen-Benutzererlebnis zu erzeugen.

2. Computerlesbares Medium nach Anspruch 1, wobei das computerlesbare Medium einen Speicher zum Herunterladen der Anwendung umfasst.

3. Computerlesbares Medium nach Anspruch 1, wobei der UI-Bildschirm ein Menü zum Empfangen eines Benutzerbefehls zum Ausführen der ersten Anwendung auf dem Anzeigegerät (104a) enthält.

4. Computerlesbares Medium nach Anspruch 1, wobei der UI-Bildschirm ein Menü zum Empfangen eines Benutzerbefehls zum Installieren der ersten Anwendung auf dem Anzeigegerät (108a) enthält.

5. Computerlesbares Medium nach Anspruch 4, wobei der Vorgang ferner Folgendes umfasst:
basierend auf einem Befehl zum Installieren der ersten Anwendung, die über das Menü eingegeben wird, Bereitstellen einer UI, die angibt, dass die erste Anwendung auf dem Anzeigegerät (110a) installiert wird.

6. Computerlesbares Medium nach Anspruch 4, wobei der Vorgang ferner Folgendes umfasst:
basierend auf einem Befehl zum Installieren der ersten Anwendung, der über das Menü eingegeben wird, Übertragen eines Steuerbefehls zum Installieren der ersten Anwendung (224).

7. Computerlesbares Medium nach Anspruch 4, wobei der Vorgang ferner Folgendes umfasst:
basierend auf einem Befehl zum Installieren der ersten Anwendung, die über das Menü eingegeben wird, Übertragen eines Steuerbefehls zum Installieren der ersten Anwendung (224) und eines Steuerbefehls zum Ausführen der ersten Anwendung, wenn die Installation der ersten Anwendung abgeschlossen ist (218).

8. Computerlesbares Medium nach Anspruch 1, wobei sich eine Plattform des Endgeräts von einer Plattform des Anzeigegeräts unterscheidet.

9. Computerlesbares Medium nach Anspruch 1, wobei der Vorgang ferner Folgendes umfasst:
Identifizieren, ob die erste Anwendung auf dem Anzeigegerät (212) ausgeführt wird, und basierend auf dem Identifizieren, dass die erste Anwendung nicht ausgeführt wird, Bereitstellen des UI-Bildschirms zum Ausführen der ersten Anwendung (214).

10. Anzeigegerät (102b, 104b, 106b, 108b, 110b), das ein Fernsehgerät ist, umfassend:
eine Kommunikationsschnittstelle; und
einen Prozessor, der dazu konfiguriert ist,
Informationen zum Bereitstellen eines UI-Bildschirms auf einem Ausführungsbildschirm einer Anwendung zu übertragen, die in einem Endgerät (102a, 104a, 106a, 108a, 110a, 302) ausgeführt wird, das kommunikativ über die Kommunikationsschnittstelle verbunden ist,
wobei der Prozessor dazu konfiguriert ist, basierend darauf, ob eine erste Anwendung auf dem Anzeigegerät installiert ist, Informationen darüber zu übertragen, ob die erste Anwendung über die Kommunikationsschnittstelle installiert ist, so dass ein Ul-Bildschirm zum Ausführen der ersten Anwendung (214) oder Installieren der ersten Anwendung (220) auf dem Ausführungsbildschirm der Anwendung bereitgestellt wird, die in dem Endgerät ausgeführt wird;
wobei die Anwendung, die in dem Endgerät ausgeführt wird, eingerichtet ist, mit der ersten Anwendung auf dem Anzeigegerät in Verbindung zu stehen;
**dadurch gekennzeichnet, dass** die im Endgerät ausgeführte Anwendung und die erste Anwendung im Anzeigegerät angeordnet sind, um gemeinsam auszuführen, um eine konvergente Multiscreen-Benutzererfahrung mit den Anwendungen zu erzeugen.

11. Anzeigegerät nach Anspruch 10, wobei der Prozessor dazu konfiguriert ist, basierend auf einem Signal zum Anfordern der empfangenen Informationen die Informationen als Antwort auf das Signal zu übertragen.

12. Anzeigegerät nach Anspruch 10, ferner umfassend:
einen Bildschirm,
wobei der Prozessor dazu konfiguriert ist, basierend auf Empfangen eines Signals, das einer Benutzerbefehlseingabe über den UI-Bildschirm entspricht, die Anzeige so zu steuern, dass sie einen Bildschirm anzeigt, der zumindest einen Ausführungszustand der ersten Anwendung oder einen Installationszustand der ersten Anwendung anzeigt.

13. Anzeigegerät nach Anspruch 10, wobei der UI-Bildschirm ein Menü zum Empfangen eines Benutzerbefehls zum Ausführen der ersten Anwendung auf dem Anzeigegerät enthält.

14. Endgerät (102a, 104a, 106a, 108a, 110a, 302), umfassend:
einen Bildschirm; und
einen Prozessor, der konfiguriert ist, um:
basierend auf einer ausgeführten Anwendung (202), Informationen darüber zu empfangen, ob eine erste Anwendung auf einem Anzeigegerät (102b, 104b, 106b, 108b, 110b) installiert ist, das ein mit dem Endgerät 210 kommunikativ verbundenes Fernsehgerät ist; und
die Anzeige so zu steuern, dass sie einen UI-Bildschirm zum Ausführen der ersten Anwendung (214) oder zum Installieren der ersten Anwendung (220) in dem Anzeigegerät auf einem Ausführungsbildschirm der Anwendung basierend auf den empfangenen Informationen bereitstellt;
wobei die Anwendung, die in dem Endgerät ausgeführt wird, eingerichtet ist, mit der ersten Anwendung in dem Anzeigegerät in Verbindung zu stehen;
**dadurch gekennzeichnet, dass** die im Endgerät ausgeführte Anwendung und die erste Anwendung im Anzeigegerät so angeordnet sind, dass sie zusammen ausgeführt werden, um mit den Anwendungen eine konvergente Multiscreen-Benutzererfahrung zu erzeugen.

## Revendications

1. Support lisible par ordinateur stockant une instruction informatique qui permet à un dispositif terminal (102a, 104a, 106a, 108a, 110a, 302) d'effectuer une opération lorsqu'elle est en cours d'exécution par un processeur du dispositif terminal, l'opération comprenant :
sur la base d'une application (304) étant exécutée dans le dispositif terminal (202), la réception d'informations pour savoir si une première application est installée dans un dispositif d'affichage (102b, 104b, 106b, 108b,
110b) connecté de façon communicative au dispositif terminal (210) dans lequel le dispositif d'affichage est un téléviseur ; et
la fourniture d'un écran d'interface utilisateur pour au moins l'une de l'exécution de la première application (214) ou de l'installation de la première application dans le dispositif d'affichage (220) sur un écran d'exécution de l'application (304) sur la base des informations reçues ;
dans lequel l'application (304) étant exécutée dans le dispositif terminal est conçue pour être en communication avec la première application dans le dispositif d'affichage ;
**caractérisé en ce que** l'application (304) étant exécutée dans le dispositif terminal et la première application dans le dispositif d'affichage sont exécutées ensemble pour produire une expérience utilisateur multi-écrans convergente avec les applications.

2. Support lisible par ordinateur selon la revendication 1, dans lequel le support lisible par ordinateur comporte une mémoire pour le téléchargement de l'application.

3. Support lisible par ordinateur selon la revendication 1, dans lequel l'écran d'interface utilisateur comporte un menu permettant de recevoir une commande utilisateur pour l'exécution de la première application dans le dispositif d'affichage (104a).

4. Support lisible par ordinateur selon la revendication 1, dans lequel l'écran d'interface utilisateur comporte un menu permettant de recevoir une commande utilisateur pour l'installation de la première application dans le dispositif d'affichage (108a).

5. Support lisible par ordinateur selon la revendication 4, dans lequel l'opération comprend en outre :
sur la base d'une commande pour l'installation de la première application étant entrée via le menu, la fourniture d'une interface utilisateur indiquant que la première application est en cours d'installation dans le dispositif d'affichage (110a).

6. Support lisible par ordinateur selon la revendication 4, dans lequel l'opération comprend en outre :
sur la base d'une commande pour l'installation de la première application étant entrée via le menu, la transmission d'une commande de contrôle pour l'installation de la première application (224).

7. Support lisible par ordinateur selon la revendication 4, dans lequel l'opération comprend en outre :
sur la base d'une commande pour l'installation de la première application étant entrée via le menu, la transmission d'une commande de contrôle pour l'installation de la première application (224) et d'une commande de contrôle pour l'exécution de la première application lorsque l'installation de la première application est terminée (218).

8. Support lisible par ordinateur selon la revendication 1, dans lequel une plate-forme du dispositif terminal est différente d'une plate-forme du dispositif d'affichage.

9. Support lisible par ordinateur selon la revendication 1, dans lequel l'opération comprend en outre :
le fait d'identifier si la première application est en cours d'exécution dans le dispositif d'affichage (212), et sur la base de l'identification que la première application n'est pas en cours d'exécution, la fourniture de l'écran d'interface utilisateur pour l'exécution de la première application (214).

10. Dispositif d'affichage (102b, 104b, 106b, 108b, 110b) qui est un téléviseur, comprenant :
une interface de communication ; et
un processeur configuré pour transmettre des informations permettant de fournir un écran d'interface utilisateur sur un écran d'exécution d'une application qui est en cours d'exécution dans un dispositif terminal (102a, 104a, 106a, 108a, 110a, 302) connecté de façon communicative via l'interface de communication,
dans lequel le processeur est configuré pour, si une première application est installée dans le dispositif d'affichage, transmettre des informations indiquant si la première application est installée via l'interface de communication de sorte qu'un écran d'interface utilisateur pour au moins l'une de l'exécution de la première application (214) ou de l'installation de la première application (220) est fourni sur l'écran d'exécution de l'application qui est exécutée dans le dispositif terminal ;
dans lequel l'application étant exécutée dans le dispositif terminal est conçue pour être en communication avec la première application dans le dispositif d'affichage ;
**caractérisé en ce que** l'application étant exécutée dans le dispositif terminal et la première application dans le dispositif d'affichage sont conçues pour être exécutées ensemble afin de produire une expérience utilisateur multi-écrans convergente avec les applications.

11. Dispositif d'affichage selon la revendication 10, dans lequel le processeur est configuré pour, sur la base d'un signal permettant de demander les informations étant reçues, transmettre les informations en réponse au signal

12. Dispositif d'affichage selon la revendication 10, comprenant en outre :
un affichage,
dans lequel le processeur est configuré pour, sur la base d'un signal correspondant à une entrée de commande utilisateur via l'écran d'interface utilisateur étant reçu, contrôler l'affichage pour afficher un écran indiquant au moins l'un d'un état d'exécution de la première application ou d'un état d'installation de la première application.

13. Dispositif d'affichage selon la revendication 10, dans lequel l'écran d'interface utilisateur comporte un menu permettant de recevoir une commande utilisateur pour l'exécution de la première application dans le dispositif d'affichage.

14. Dispositif terminal (102a, 104a, 106a, 108a, 110a, 302), comprenant :
un affichage ; et
un processeur configuré pour :
sur la base d'une application étant exécutée (202),
recevoir des informations pour savoir si une première application est installée dans un dispositif d'affichage (102b, 104b, 106b, 108b, 110b) qui est un téléviseur connecté de façon communicative au dispositif terminal 210) ; et
contrôler l'affichage pour fournir un écran d'interface utilisateur pour au moins l'une de l'exécution de la première application (214) ou de l'installation de la première application (220) dans le dispositif d'affichage sur un écran d'exécution de l'application sur la base des informations reçues ;
dans lequel l'application étant exécutée dans le dispositif terminal est conçue pour être en communication avec la première application dans le dispositif d'affichage ;
**caractérisé en ce que** l'application étant exécutée dans le dispositif terminal et la première application dans le dispositif d'affichage sont conçues pour être exécutés ensemble afin de produire une expérience utilisateur multi-écrans convergente avec les applications.
